# EUROPEAN PATENT APPLICATION

(11) **EP 4 290 818 A1**
(43) Date of publication of application: **13.12.2023**
(21) Application number: 22178392.1
(22) Date of filing: 10.06.2022
(51) Int. Cl.: H04L 41/0681, H04L 41/0853, H04L 41/0869, H04L 41/08, H04L 41/0893, H04L 41/12, H04L 43/0811, H04L 41/084

(54) **A METHOD OF SETTING UP NETWORK COMPONENTS IN A WIND POWER PLANT COMMUNICATION NETWORK**

(71) Applicant: VESTAS WIND SYSTEMS A/S, 8200 Aarhus N (DK)
(72) Inventor: FREKSEN, Michael, 8800 Viborg (DK); SCHUMACHER, Steffen, 8870 Langå (DK); JENSEN, Steen Nobert, 8220 Brabrand (DK); KNUDSEN, Henrik Althof, 8410 Rønde (DK); NOGUEIRA SANTOS, Antonio Manuel, 4440-702 Valongo (PT)
(74) Representative: Vestas Patents Department

(57) **Abstract**

The present disclosure provides a method for setting up network components in a wind power plant communication network. The communication network comprises a plurality of network components each comprising a component type identifier and being suitable for serving a function which can be changed by a configuration command, and a perimeter component configured for communication with the plurality of network components and configured for communication with an external server outside the wind power plant communication network. The external server has access to a list of component types and at least one corresponding configuration for each network component. The method comprising the following steps: collecting, by use of the perimeter component, the component type identifier from a plurality of the network components, comparing, by the server, the collected component type identifier with the list of component types of the external server, receiving corresponding configuration information from the external server, and configuring the network component based on the received configuration information.

## Description

### Field of the disclosure

The present disclosure relates to a method for setting up network components in a wind power plant communication network. The network comprises a plurality of network components. Each of these network components comprises a component type identifier. The network components are suitable for serving a function in the communication network, where the function can be changed by a configuration command.

### Background of the disclosure

Traditionally, configuration of network components, such as switches, is done manually, on-site for each component as part of the set-up of the communication network. This is time consuming and due to a high number of components faults may occur.

### Description of the disclosure

It is an object of embodiments of the disclosure to provide an improved method for setting up network components in a wind power plant communication network.

The disclosure provides a method for setting up network components in a wind power plant communication network, the communication network comprising:
- a plurality of network components each comprising a component type identifier and being suitable for serving a function which can be changed by a configuration command, and
- a perimeter component configured for communication with the plurality of network components and configured for communication with an external server outside the wind power plant communication network,

where the external server has access to a list of component types and at least one corresponding configuration for each component type,
the method comprising the following steps:
   - collecting, by use of the perimeter component, the component type identifier from a plurality of the network components,
   - comparing, by the server, the collected component type identifier with the list of component types of the external server,
   - receiving corresponding configuration information from the external server, and
   - configuring the network component based on the received configuration information.

The wind power plant communication network is a computer-based network for one or more wind turbines. In the present context the term 'wind energy plant' should be interpreted to mean a plurality of wind turbines arranged within a specified geographical area; i.e. a site, where the wind turbines when erected will share some infrastructure, such as internal power grid, connection to an external power grid, substations, access roads, etc.

The wind turbine(s) is(are) configured for connection to a power grid having a power demand. The power demand may vary during the day and during the year. The power demand may further vary dependent on a power output from other sources, such as a power output of another wind energy plant and/or power output from other kinds of energy sources, such as conventional power plants, solar power plants, etc.

The network components in the wind power plant communication network may be different type of switches, routers, access points, cellular base stations, firewalls, etc.

Each of the plurality of network components comprises a component type identifier to be able to identify the type of each of the network components. The network components are suitable for serving one or more functions in a communication network. The function of the network components in the communication system can be changed by a configuration command applied to the specific network component.

The communication network comprises a perimeter component which is configured for communication with the plurality of network components and is further configured for communication with an external server outside the wind power plant communication network. The external server may physically be located outside the wind energy plant. Alternatively, the external server may physically be located inside the wind energy plant, while still being outside the communication network.

The external server has access to a list of component types and at least one corresponding configuration for each type of component. In one embodiment, the external server may comprise the list of component types and the at least one corresponding configuration for each component type.

The method comprises a step in which the component type identifier is collected from a plurality of the network components by use of the perimeter component. In one embodiment, the component type identifier may be collected from each of the plurality of network components. The component type identifiers may be collected one by one in subsequent steps. Alternatively, a plurality of component type identifiers may be collected in single step. It should, however, be understood, that some component type identifiers may be collected one by one, whereas other components type identifiers may be collected in a single step.

The method comprises a further step of comparing the collected component type identifier with the list of component types of the external server, where the comparison is carried out by the server.

Additionally, corresponding configuration information is received from the external server, and the network component is configured based on the received configuration information.

By the steps of collecting the component type identifier and comparing the collected component type identifier with the list of component types to which the external server has access, and the subsequent step of receiving corresponding configuration information, manual configuration of the network components may be avoided. This may both save time and considerably reduce the risk of faults.

In one embodiment, the step of configuring the network component may be carried out automatically upon receipt of the configuration information. This may further save time and further reduce the risk of fault, as manual interaction may be complete avoided.

The step of collecting the component type identifier may be carried out by pushing the component type identifier from the network component to the server via the perimeter component. Thus, the perimeter component may be responsible for the collection of the component type identifiers, whereby it may be assured that communication is on the initiative of the perimeter component. Consequently, data safety may be increased while the risk of hacking and unwanted access to the network components in the wind power plant communication network may be considerably reduced, as all access including unwanted access may be denied.

Additionally, the step of receiving corresponding configuration information from the server may be carried out by pulling the configuration information from the server via the perimeter component. Thus, the perimeter component may likewise be responsible for receiving the configuration information, which may further increase data safety.

The external server may further comprise or may have access to network topology information which network topology information may associate component type identifiers with connecting interfaces in the communication network to thereby establish a predefined function of the component. The connecting interfaces in the communication network may be physical ports.

The method may comprise a step of determining whether the network component is connected to an associated network interface in the wind power plant communication network, whereby it may be verified that the network components are paired to the correct ports or not. This may further reduce the risk of faults in the communication network.

In one embodiment, the method may further comprise a step of generating a connection alert if the network component is not connected to the associated network interface. The connection alert may be forwarded to the external server e.g., for subsequent manual correction of the connection.

The plurality of network components may further comprise a unique identifier, whereby it may be possible to differentiate even between network components of the same type. The method may further comprise a step of collecting, by use of the perimeter component, the unique identifier from a plurality of network components, and a step of comparing the unique identifier with a list of allowed unique identifiers at the external server.

The step of collecting the unique identifier may be carried out by pushing the component type identifier from the network component to the server via the perimeter component. Thus, communication may be on the initiative of the perimeter component.

By comparing the unique identifier with allowed unique identifiers at the list of allowed unique identifiers it may be possible to verify whether the specific network component is the correct one or not.

Based on the unique identifier it may, as an example, additionally be possible to determine a batch to which a network component belongs. In case a supplier presents information that network components of a specific batch are defective, it may be possible to identify each of these network components in the communication network e.g., to plan for a replacement hereof.

The method may further comprise a step of generating an alert if the unique identifier is not on the list of allowed unique identifiers. If the unique identifier is not on the list, the network component may in one embodiment be replaced with a correct network component, i.e., a network component having a unique identifier which is on the list of allowed unique identifiers. Alternatively, if the component type identifier of the network component is on the list of component types, but not on the list of allowed unique identifiers, the network component may in one embodiment still be approved, and the unique identifier may subsequently be added to the list of allowed unique identifiers.

The perimeter component may form part of the plurality of network components. In one embodiment, the method may comprise an initial step of identifying the perimeter component among the plurality of network component. The method may additionally comprise a step of configuring the perimeter component for communication with the external server, and a subsequent step of configuring the perimeter component for communication with the remaining network components. Subsequently, communication with the external server may be via the perimeter component.

The wind power plant communication network may form a network infrastructure of a wind power plant. In one embodiment, the communication network may form part of a SCADA system.

### Brief description of the drawings

Embodiments of the disclosure will now be further described with reference to the drawings, in which:
Fig. 1 illustrates a wind turbine,
Fig. 2 illustrates a wind energy plant comprising a plurality of wind turbines, and
Fig. 3 is a flow chart illustrating a method for setting up network components in a wind power plant communication network.

### Detailed description of the drawings

It should be understood that the detailed description and specific examples, while indicating embodiments of the disclosure, are given by way of illustration only, since various changes and modifications within the spirit and scope of the disclosure will become apparent to those skilled in the art from this detailed description.

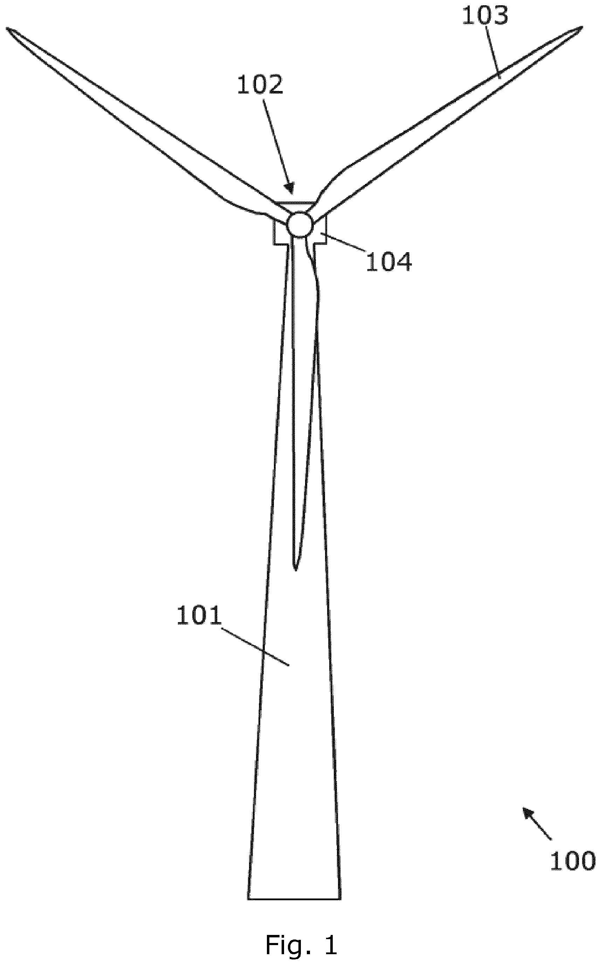

Figure 1 shows a wind turbine 100 (which may also be referred to as a wind turbine generator (WTG)) comprising a tower 101 and a rotor 102 with at least one rotor blade 103, such as three blades. The rotor is connected to a nacelle 104 which is mounted on top of the tower 101 and being adapted to drive a generator situated inside the nacelle. The rotor 102 is rotatable by action of the wind. The wind induced rotational energy of the rotor blades 103 is transferred via a shaft to an electrical generator. Thus, the wind turbine 100 is capable of converting kinetic energy of the wind into mechanical energy by means of the rotor blades and, subsequently, into electric power by means of the generator. The generator may include a power converter for converting the generator AC power into a DC power and a power inverter for converting the DC power into an AC power to be injected into a utility grid. The generator is controllable to produce a power corresponding to a power request. The blades 103 can be pitched in order to alter the aerodynamic properties of the blades, e.g., in order to maximize uptake of the wind energy and to ensure that the rotor blades are not subjected to too large loads when strong winds are blowing. The blades are pitched by a pitch system with a pitch force system controlled by a pitch control system, where the pitch force system includes actuators for pitching the blades dependent on a pitch request from the pitch control system.

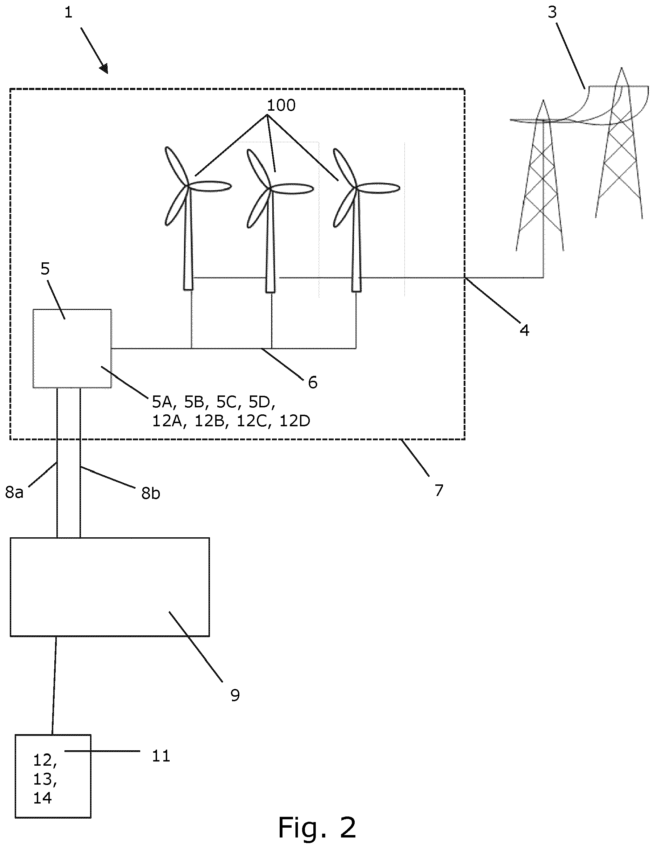

Fig. 2 is a diagrammatic view of a wind energy plant 1 comprising a plurality of wind turbines 100, three of which are shown. The wind turbines 100 are connected to a power grid 3 via a point of common coupling 4. Accordingly, the power produced by the wind turbines 2 is supplied to the power grid 3.

The wind turbines 100 are further connected to a central plant computer system 5 via a communication connection 6, thereby allowing data collected at the wind turbines 2 to be communicated to the central plant computer system 5. The central plant computer system 5 may comprise a SCADA server, a power plant controller (PPC), or any other suitable kind of central unit for control and/or supervision of the wind turbines. The central computer system 5 comprises a plurality of network components 5A, 5B, 5C, such as switches, routers, Wi-Fi nodes, firewalls, etc., in a wind power plant communication network 7 schematically illustrated by the dotted box.

The central plant computer system at the wind energy plant 1 is in communication with an external server 9 via communication connections 8a, 8b, where communication connection 8a is for communication from the central computer system 5 to the external server 9, whereas the communication connection 8b is for communication from the external computer system 8 to the central computer system 5.

Each of the network components 5A, 5B, 5C comprises a component type identifier 12A, 12B, 12C allowing identification of the specific type of component. The network components 5A, 5B, 5C are suitable for serving a function in the communication network 7, which function can be changed by a configuration command. The communication network 7 further comprises a perimeter component 5D configured for communication with the plurality of network components 5A, 5B, 5C and configured for communication with the external server 9 outside the wind power plant communication network 7.

The external server 9 has access to a list 11 of component types 12 and at least one corresponding configuration 13 for each component type 5A, 5B, 5C thereby linking component types with possible configuration(s). In the illustrated embodiment, the list 11 to which the external server 9 has access further comprises allowed unique identifiers 14 to thereby differentiate between components of the same types.

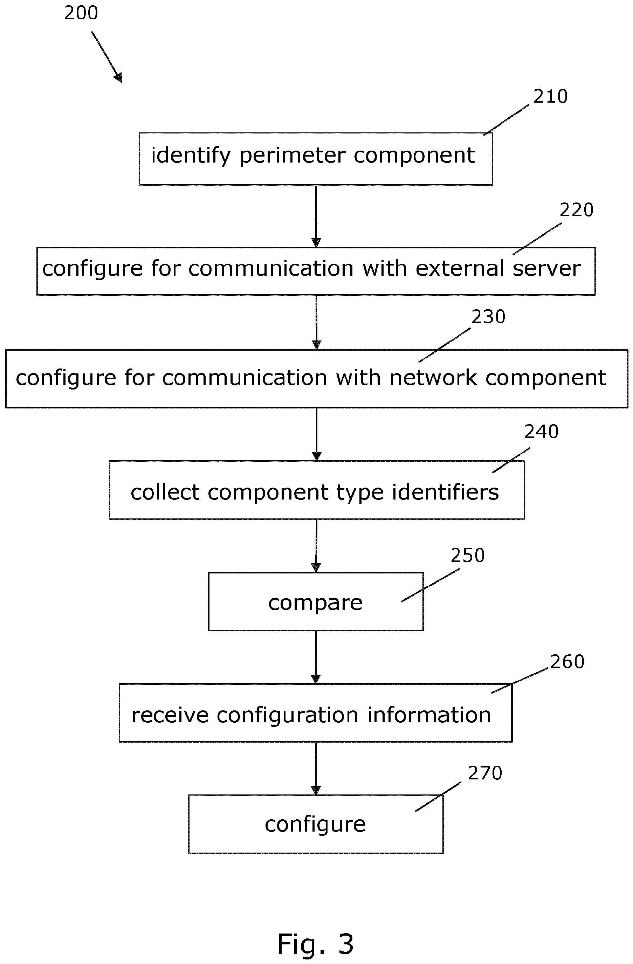

Fig. 3 is a flow chart illustrating a method 200 for setting up network components 5A, 5B, 5C in a wind power plant communication network 7, where the communication network 7 comprises a plurality of network components 5A, 5B, 5C, each comprising a component type identifier 12A, 12B, 12C and being suitable for serving a function which can be changed by a configuration command, and a perimeter component 5D configured for communication with the plurality of network components 5A, 5B, 5C and configured for communication with an external server 9 outside the wind power plant communication network 7 (as illustrated in Fig. 2).

The external server 9 has access to a list 11 of component types 12, at least one corresponding configuration 13 for each component type 5A, 5B, 5C, and allowed unique identifiers 14 (see Fig. 2).

The method 200 comprises the following steps:
- collecting 240, by use of the perimeter component 5D, the component type identifier 12A, 12B, 12C from a plurality of the network components 5A, 5B, 5C,
- comparing 250, by the external server 9, the collected component type identifier 12A, 12B, 12C with the list 11 of component types 12 of the external server 9,
- receiving 260 corresponding configuration information 13 from the external server 9, and
- configuring 270 the network components 5A, 5B, 5C based on the received configuration information 13.

The method 200 may comprise initial steps of identifying 210 the perimeter component 5D having a component type identifier 12D, and a step of configuring 220 the perimeter component 5D for communication with the external server 9, and a subsequent step of configuring 230 the perimeter component 5D for communication with the remaining network components 5A, 5B, 5C.

In one embodiment, the method 200 for setting up network components 5A, 5B, 5C in a wind power plant communication network 7 may be carried out by the following steps:
In an initial step 210, a perimeter component 5D in the form of an un-initialised ethernet switch initialises IP configuration from a wind power plant external connection point (WAN router) via Dynamic IP allocation protocol (DHCP), including the address of an external server 9. The ethernet switch 5D continues connection to the external server 9 e.g. via https, and emits component type identifiers 12A, 12B, 12C in the form of environment data such as hardware model, serial number, firmware version, and is also connected to network components/devices 5A, 5B, 5C which have been discovered via device identification protocols (e.g. CDP/LLDP).

If the external server 9 has configuration information 13 in the form of pending configuration instructions for the network components/devices 5A, 5B, 5C matching the model and serial number, these are sent to the device in a receiving step 260.

Configuration instructions 13 will usually include firmware updates, certificate deployment and device configuration, but can be expanded to other activities.

The external server 9 will reply with these instructions 13, but the server 9 may also host e.g. Firmware and configurations to be applied, which is downloaded by the ethernet switch as an additional step to the receiving step 260.

A configuring step 270 is carried out subsequent to the receiving step 260. Upon completion of instructions 13, the ethernet switch 5D is fully configured, and may enable subsequently connected un-initialised ethernet switches 5A, 5B, 5C to be configured via the same process.

Leveraging the details about the connected neighbours, the topology can be used to setup instructions 13 in the external server 9, after the particular device 5A, 5B, 5C is connected, which removes the requirement to know the unique identifier in the form of a serial number of the device 5A, 5B, 5C in advance.

## Claims

1. A method for setting up network components in a wind power plant communication network, the communication network comprising:
- a plurality of network components each comprising a component type identifier and being suitable for serving a function which can be changed by a configuration command, and
- a perimeter component configured for communication with the plurality of network components and configured for communication with an external server outside the wind power plant communication network,
where the external server has access to a list of component types and at least one corresponding configuration for each component type,
the method comprising the following steps:
- collecting, by use of the perimeter component, the component type identifier from a plurality of the network components,
- comparing, by the server, the collected component type identifier with the list of component types of the external server,
- receiving corresponding configuration information from the external server, and
- configuring the network component based on the received configuration information.

2. A method according to claim 1, wherein the step of collecting the component type identifier is carried out by pushing the component type identifier from the network component to the server via the perimeter component.

3. A method according to claim 1 or 2, wherein the step of receiving corresponding configuration information from the server is carried out by pulling the configuration information from the server via the perimeter component.

4. A method according to any of the preceding claims, wherein the step of configuring the network component is carried out automatically upon receipt of configuration information.

5. A method according to any if the preceding claims, wherein the external server further comprises network topology information associating component type identifiers with connecting interfaces in the communication network to establish a predefined function of the component, the method comprising a step of determining whether the network component is connected to an associated network interface in the wind power plant communication network.

6. A method according to claim 5, further comprising a step of generating a connection alert if the network component is not connected to the associated network interface.

7. A method according to any of the preceding claims, wherein the plurality of network components further comprises a unique identifier, and wherein the method further comprises a step of collecting, by use of the perimeter component, the unique identifier from a plurality of network components, and a step of comparing the unique identifier with a list of allowed unique identifiers at the external server.

8. A method according to claim 7, further comprising a step of generating an alert if the unique identifier is not on the list of allowed unique identifiers.

9. A method according to any of the preceding claims, wherein the perimeter component forms part of the plurality of network components, the method comprising an initial step of identifying the perimeter component and configuring the perimeter component for communication with the external server, and a subsequent step of configuring the perimeter component for communication with the remaining network components.

10. A method according to any of the preceding claims, wherein the wind power plant communication network forms a network infrastructure of a wind power plant.
